# EUROPÄISCHE PATENTSCHRIFT

(11) **EP 1 440 759 B1**
(45) Veröffentlichungstag und Bekanntmachung des Hinweises auf die Patenterteilung: **15.08.2007**
(21) Anmeldenummer: 03001704.0
(22) Anmeldetag: 27.01.2003
(51) Int. Cl.: B23K 1/00, B23K 11/00, B23K 26/32, B23K 26/22, F28F 1/10, F28F 21/08, B21C 37/22, B21D 53/02, B23K 11/11

(54) **Verfahren zur Herstellung eines Wärmetauschers**
Method for manufacturing a heat exchanger
Méthode pour fabriquer un échangeur de chaleur

(43) Veröffentlichungstag der Anmeldung: 28.07.2004
(73) Patentinhaber: Balcke-Dürr GmbH, 46049 Oberhausen (DE)
(72) Erfinder: Podhorsky, Miroslav, Dr., 40882 Ratingen (DE); Holten, Wolfgang, 40629 Düsseldorf (DE); Hintzen, Franz-Josef, 40883 Ratingen (DE); Schrey, Hans-Georg, 40878 Ratingen (DE); Schug, Wolfgang, 40878 Ratingen (DE)
(74) Vertreter: Lang, Friedrich

(56) Entgegenhaltungen:
- EP-A- 0 417 894
- EP-A- 0 822 025
- EP-A- 0 823 296
- US-A1- 2001 042 615
- US-A1- 2002 007 936
- US-B1- 6 450 253
- PATENT ABSTRACTS OF JAPAN vol. 010, no. 372 (M-544), 11. Dezember 1986 (1986-12-11) & JP 61 165268 A (HITACHI ZOSEN CORP), 25. Juli 1986 (1986-07-25)

## Beschreibung

Die Erfindung betrifft ein Verfahren zur Herstellung eines Wärmetauschers mit einem metallischen Rohr mit einer aluminiumbeschichteten Oberfläche und mit auf der Oberfläche angeordneten die Wärmeübertragungsfläche vergrößernden Rippen aus Aluminium.

Derartige Wärmetauscher sind bekannt. Die EP 0 417 894 , die als nächstliegenden Stand der Technik angegeben ist, offenbart einen gattungsgemäßen Wärmetauscher. Zur Herstellung dieses Wärmetauschers wird auf einem Eisen- bzw. Stahlrohr, welches eine Oberflächenbeschichtung aus Aluminium aufweist, ein Lamellenteil aus Aluminium befestigt. Dieses geschieht, indem zwischen dem Rohr und dem Lamellenteil Hartlötmaterial bereitgestellt wird und die Baugruppe in einem Lötofen knapp über der Lötschmelztemperatur erwärmt wird und die Temperatur über eine bestimmte Zeitdauer aufrechterhalten wird, um eine hartgelötete Verbindung zwischen dem Rohr und der Lamelle zu erreichen. Die Temperatur ist dabei so zu wählen, daß das Lötmaterial einen Oberflächenüberzug aufweist, der von Eisenaluminiumzwischenmetallverbindungen oder Zwischenphasen davon frei ist. Hauptaugenmerk wird dabei auf die Reinheit dieser Verbindungsstellen hinsichtlich Eisenaluminiumverbindungen gelegt, da die Verbindung durch derartige Zwischenmetallverbindungen spröde wird und sich die Lamelle von dem Rohr lösen kann. Des weiteren sind die Randbedingungen des offenbarten Lötverfahrens zur Erzielung einer festen Verbindung zwischen Lamelle und Rohr exakt einzuhalten, wodurch dieses Verfahren sehr aufwendig ist und deshalb für eine wirtschaftliche großtechnische Anwendung nicht geeignet ist.

Die Anmelderin hat dann in der EP 0822025 A1 ein Verfahren vorgestellt, bei dem die Rippen eines gewellten Rippenbandes jeweils nur bereichsweise mit dem Wärmetauscherrohr verschweißt werden. In der EP 0823296 A2 hat sie ein ähnliches Verfahren vorgestellt, bei dem die einzelnen Rippen zumindest in den Teilbereichen ihrer Berührungsflächen mit der Mantelfläche der Rohre durch Kleben oder durch Weichlöten verbunden werden. Als Alternative zum Schweißen wurde darin weiterhin vorgeschlagen, die Rippen zumindest teilweise mittels Durchsetzfügen mit dem Rohr zu verbinden.

Aus der US 6450253 B1 ist ein Verfahren zur Herstellung eines Wärmetauschers für Kraftfahrzeuge bekannt, bei dem zum Verbinden einzelner Bauteile des Wärmetauschers Punktverschweißungen vorgeschlagen werden. Demgegenüber schlägt die US 2002/0007936 A1 die Verwendung von Laserschweißen bei der Herstellung kleiner Kühler für Mikroprozessoren vor.

All diesen bekannten Herstellungsverfahren gemeinsam ist jedoch die relativ aufwendige Fixierung der einzelnen Rippen vor der Herstellung der Wärmeübergangsschichten, wobei die beiden zuletzt genannten Schriften Verfahren offenbaren, die nicht zur Herstellung von großflächigen Industriewärmetauschern geeignet sind. Insgesamt besteht daher der Bedarf an einem wirtschaftlicheren Herstellungsverfahren, das auch in großtechnischen Anwendungen verwendet werden kann.

Der Erfindung liegt die **Aufgabe** zugrunde, ein Verfahren bereitzustellen, mit dem auf einfache und kostengünstige Weise großtechnisch anwendbar ein Wärmetauscher der zuvor beschriebenen Art hergestellt werden kann.

Erfindungsgemäß erfolgt die Lösung der Aufgabe mit einem Verfahren gemäß Anspruch 1. Es wird also ein Verfahren bereitgestellt, welches sich durch ein Verbinden der beschichteten Oberfläche mit der Rippe durch punktförmiges dauerhaftes Fixieren und dem Herstellen eines großflächigen Wärmeübergangs zwischen Oberfläche und Rippe durch Auffüllen der Zwischenräume zwischen beschichteter Oberfläche und Rippe mit Wärmeleitmaterial auszeichnet.

Gemäss der Erfindung handelt es sich bei dem punktförmigen dauerhaften Fixieren um Punktschweißen oder Durchsetzfügen. Die aufwendige flächenmäßige Verspannung der Rippen mit dem Rohr entfällt vor dem Herstellen des Wärmeübergangs. Auch müssen die Bauteile nicht extra entfettet werden, wodurch ein zusätzlicher Arbeitsschritt eingespart werden kann. Des weiteren sind hinsichtlich der herzustellenden Wärmeübergangsqualität an die dafür notwendigen Prozessparameter geringere Anforderungen zu stellen. Das Punktschweißen wird vorteilhaft durch Widerstandsschweißen oder Laserpunktschweißen hergestellt. Auf das metallische Rohr, bei dem es sich um ein aluminiumbeschichtetes Stahlrohr handelt, werden die Aluminiumrippen aufgesetzt und durch Punktschweißen mit dem Rohr verbunden. Somit entsteht eine stabile Struktur zwischen Rohr und Rippe, bei dem allerdings die durch das Punktschweißen hergestellten Berührungspunkte nicht als Wärmeübergang ausreichend sind. In die zwischen der Oberfläche des Rohres und der Rippen bestehenden Zwischenräume ist ein Wärmeleitmaterial vorhanden. Hierbei handelt es sich um Lot. Der Wärmeübergang wird gemäß Anspruch 1 durch Verflüssigen des Lots im Lötverfahren mit anschließender Abkühlung hergestellt. Das Löten erfolgt vorteilhafterweise als Hartlöten bei hohen Temperaturen und kurzen Einwirkzeiten. Das Hartlöten selbst erfolgt in einem Lötofen und vorteilhafterweise unter Schutzgasatmosphäre. Da das Löten selbst aufgrund der hohen Temperaturen zügig durchgeführt wird, sind an die Schutzatmosphäre im Lötofen nur geringe Anforderungen zu stellen. Des weiteren ergeben sich gegenüber bekannten Verfahren erhebliche Vereinfachungen und Einsparungen.

Eine weitere Lehre der Erfindung sieht vor, daß das Lot auf einfache Weise eingebracht werden kann, indem die Aluminiumrippe bereits mit Lot beschichtet bzw. plattiert ist. Alternativ kann das Lot auch pulverförmig oder bereits verflüssigt in die Zwischenräume eingebracht werden.

Alternativ ist es ebenfalls möglich, anstelle des Punktschweißens eine formschlüssige Verbindung zwischen Oberfläche des Rohres und der Rippe durch Durchsetzfügen herzustellen. Hierbei werden an vorgegebenen Stellen die Rippen und das Rohr gemeinsam verformt. Bei dem Einsatz eines derartigen Verfahrens kann auf die Beschichtung des Rohres verzichtet werden und je nach Durchsetzfügewerkzeug die Fügung an mehreren Punkten gleichzeitig vorgenommen werden. Der Wärmeübergang läßt sich anschließend auf gleiche Weise herstellen wie zuvor beschrieben.

Auf der Zeichnung sind zwei Ausführungsbeispiele eines nach dem erfindungsgemäßen Verfahren hergestellten Rippenrohres dargestellt, und zwar zeigen:
- Fig. 1: einen Längsschnitt durch ein Rippenrohr mit auf einer Flachseite des Rohres angebrachten Rippen,
- Fig. 2: einen Querschnitt durch das Rippenrohr gemäß der Schnittlinie II-II in Fig. 1,
- Fig. 3: eine vergrößerte Schnittdarstellung des in Fig. 1 eingekreisten Bereiches III,
- Fig. 4: eine vergrößerte Schnittdarstellung des in Fig. 1 eingekreisten Bereiches IV im unverschweißten Zustand,
- Fig. 5: eine wiederum vergrößerte Darstellung des Bereiches V in Fig. 3,
- Fig. 6: eine Schnittansicht durch einen Wärmeübergangsbereich,
- Fig. 7: eine Schnittdarstellung gemäß Fig. 5 mit nachträglich eingebrachtem Wärmeübergangsmaterial,
- Fig. 8: eine Schnittansicht mit Schweißverbindung und Wärmeübergang,
- Fig.9: eine schematische Darstellung des Durchsetzfügens anhand einer Schnittdarstellung im Ausgangszustand,
- Fig. 10: eine der Fig. 9 entsprechende Darstellung nach Beendigung des Durchsetzfügens,
- Fig. 11: den Endzustand der Fügestelle in einem Schnitt entsprechend den Fign. 6 und 7 und
- Fig. 12: eine Schnittansicht eines Beispiele, das nicht im Gegenstand des Ansprüche steht, durch einen verklebten Bereich.

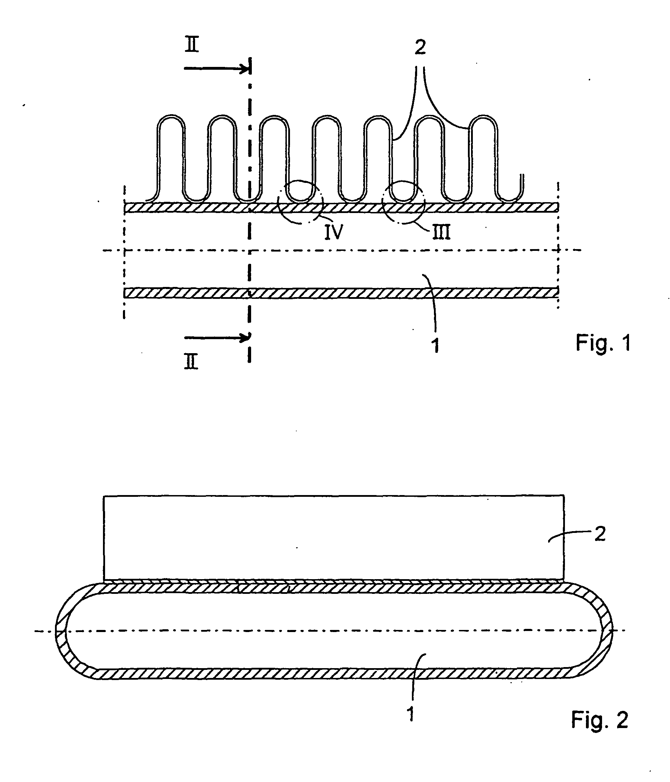

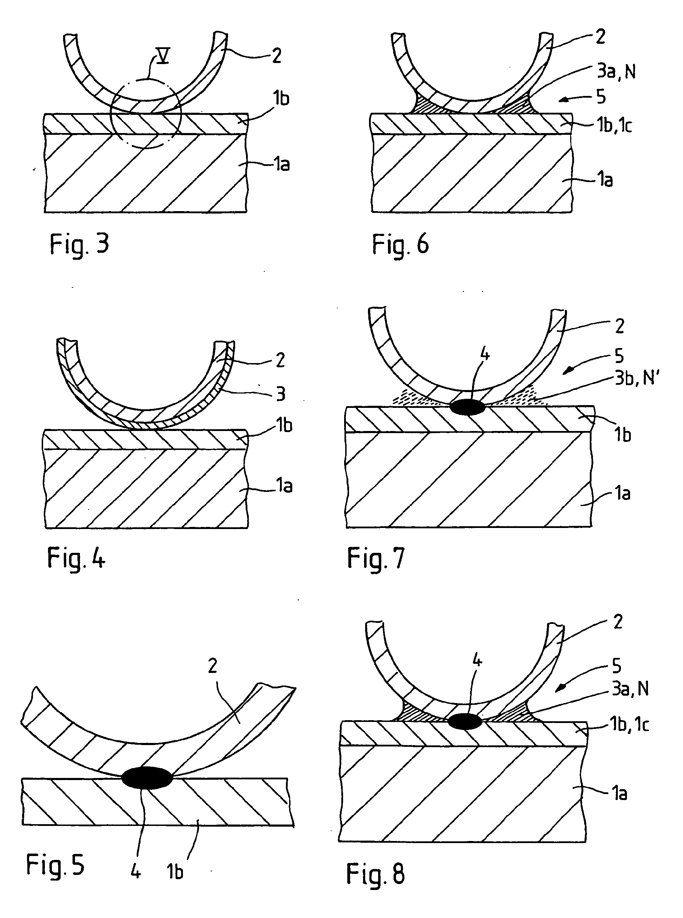

In den Fign. 1 und 2 ist schematisch ein Rohr 1 mit an seiner Flachseite angebrachten die Wärmeübertragungsfläche vergrößernden Rippen 2 dargestellt. Die Rippen 2 selbst werden durch ein gewelltes Band gebildet, dessen Wellen rechtwinklig zur Rohrlängsachse verlaufen und mindestens in Teilbereichen im Fußbereich der Rippen 2 die Mantelfläche des Rohres 1 berühren. Wie aus der vergrößerten Schnittdarstellung des in Fig. 1 eingekreisten Bereiches III in Fig. 3 hervorgeht, besteht beim dargestellten Ausführungsbeispiel das Rohr 1 aus Stahl. Es ist auf seiner Mantelfläche mit einer Beschichtung aus Aluminium versehen. Die Rippen 2 bestehen ebenfalls aus Aluminium. Aus Fig. 4 ist erkennbar, daß die Rippe 2 mit einer Lötschicht 3 versehen ist.

In Fig. 5, welche eine vergrößerte Schnittdarstellung des eingekreisten Bereichs V aus Fig. 3 darstellt, ist ein Schweißpunkt 4 dargestellt, der die Rippe 2 mit der Beschichtung 1b verbindet, und so eine stoffschlüssige Verbindung zwischen den Rippen und dem Rohr herstellt. Je nach Länge des Rohres bzw. der Anzahl der Rippen kann bereits eine Anzahl von drei bis sieben Schweißpunkten ausreichend sein, um eine stabile Verbindung zwischen den Rippen und dem Rohr herzustellen. Wird dann die in Fig. 2 dargestellte Rippen-Rohr-Anordnung mit auf der Rippe aufgebrachter Lotschicht in einen Lötofen eingebracht und bei einer Temperatur von 550° bis 620 ° C über eine Zeitdauer von 2 bis 10 Minuten erwärmt, bilden sich die in Fig. 6 dargestellten Wärmeübergangsbereiche 5, die durch das verlötete Lot 3a zwischen der Aluminiumbeschichtung 1 b und der Rippe 2 entstehen. Alternativ kann anstelle einer Lötschicht 3 das Wärmeübergangsmaterial als pulverförmiges Lot 3b in die Zwischenräume zwischen Rippe 2 und Beschichtung 1b eingebracht werden. Dieses ist in Fig. 7 dargestellt. In Fig. 8 ist dann wiederum der verlötete Wärmeübergang dargestellt. Es können sich aufgrund der Temperaturbereiche von Aluminium Eisenzwischenverbindungen bilden.

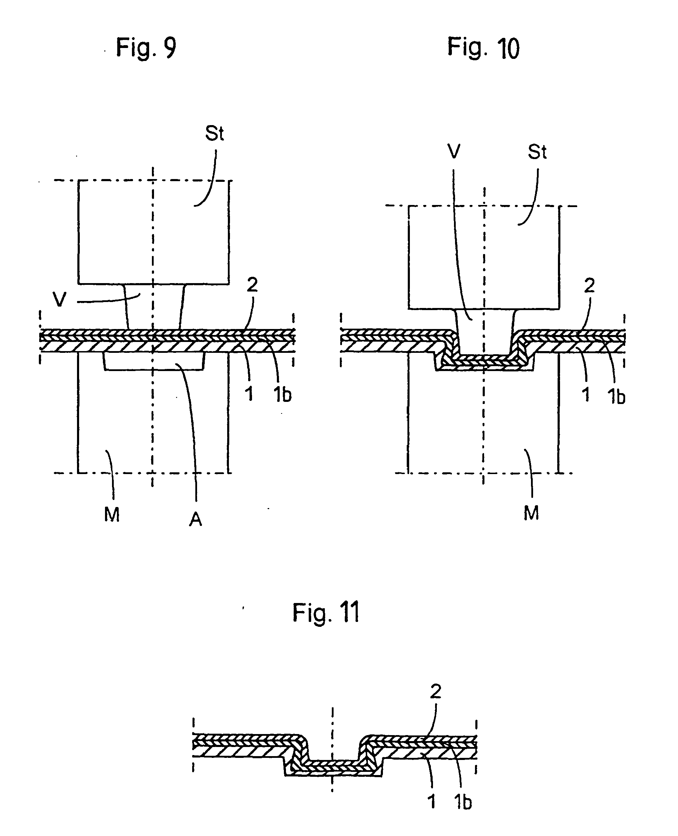

Alternativ zu den Verschweißungen kann die Verbindung zwischen Rippe und Oberfläche des Rohrs auch hergestellt werden, indem eine punktuelle Durchsetzfügung, wie sie in den Fign. 9 bis 11 schematisch dargestellt ist, durchgeführt wird. Fig. 9 zeigt dabei einen Schnitt durch ein mit einer Beschichtung 1b aus Aluminium versehenes Rohr 1 aus Stahl und den Rippen 2 ebenfalls aus Aluminium im Bereich einer Berührungsfläche zwischen diesen Teilen. Die Unterseite des Rohres 1 liegt gemäß Fig. 9 auf einer Matritze M, die mit einer Aussparung A versehen ist. Im Bereich dieser Aussparung A greift der Vorsprung V eines Stempels St an. Die Querschnittsabmessungen des Stempels St sind hierbei geringer als die Aussparung A in der Matritze M.

Wenn nunmehr gemäß Fig. 10 der Stempel St mit seinem Vorsprung V in die Aussparung A in der Matritze M gedrückt wird, verformt sich sowohl das Material des Rohres 1 und seiner Beschichtung 1 b als auch die Rippe 2, so daß sich die in der Fig. 10 dargestellte formschlüssige Verbindung zwischen dem mit der Beschichtung 1b versehenen Rohr 1 und der Rippe 2 ergibt.

Die nach Entfernen des aus Matritze M und Stempel St bestehenden Werkzeugs in Fig. 11 im Schnitt dargestellte Fügestelle zeigt, daß sich die Materialien von Rohr 1, Beschichtung 1b und Rippe 2 aufgrund des beim Durchsetzfügen eingetretenen Fließens formschlüssig ineinander verkeilt haben, so daß das beschriebene Durchsetzfügen eine zuverlässige Verbindung zwischen Rippe 2 und Rohr 1 schafft. Der Wärmeübergang wird im Anschluß an das Durchsetzfügen ebenfalls durch das zuvor beschriebene Löten erzeugt.

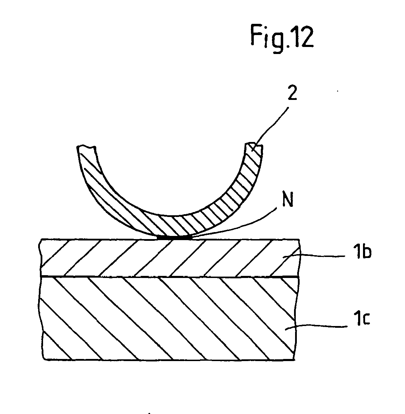

In einem Beispiel, das nicht im Gegenstand des Ansprüche steht, kann die Verbindung zwischen Rippe und Oberfläche des Rohrs durch Kleben erfolgen, wie es aus Fig. 12 ersichtlich ist. Auf die Rohroberfläche 1b wird ein Hochtemperatur-Keramikkleber N im Befestigungsbereich der Rippe 2 aufgebracht. Die Rippe 2 wird anschließend auf die Klebestellen aufgesetzt und angedrückt. Nach Aushärten des Klebers ist eine dauerhaft feste Verbindung zwischen Rippe 2 und Oberfläche des Rohrs 1b gegeben.

Alternativ zum durch Löten hergestellten Wärmeübergang, aber nicht im Gegenstand des Ansprüche, kann der Wärmeübergang 5 auch durch einen thermisch leitfähigen Hochtemperatur-Keramikkleber N hergestellt werden. Dieser wird ebenfalls nachträglich in nicht abgebundener Form N' in die Zwischenräume zwischen Rippe 2 und Beschichtung 1b eingebracht. Dieses ist aus Fig. 7 ebenfalls ersichtlich. Die thermische Leitfähigkeit wird durch Zugabe von Füllstoffen wie Aluminium eingestellt. Der nach dem Abbinden fertige Wärmeübergang 5 durch den thermisch leitenden Hochtemperatur-Keramikkleber N ist in den Fign. 5 und 8 ebenfalls gezeigt.

### Bezugszeichenliste:

- 1: Rohr
- 1a: Fe-Grundkörper
- 1b: Al-Beschichtung
- 1c: Al-Fe-Zwischenverbindungsbereich
- 2: Rippe
- 3: Lotschicht
- 3a: verlötetes Lot
- 3b: pulverförmiges Lot
- 4: Schweißpunkt
- 5: Wärmeübergangsbereich
- A: Aussparung
- M: Matritze
- St: Stempel
- V: Vorsprung
- N: Hochtemperatur-Keramikkleber
- N': nicht abgebundener Hochtemperatur-Keramikkleber

## Patentansprüche

1. Verfahren zur Herstellung eines Wärmetauschers mit einem metallischen Rohr (1) mit einer aluminiumbeschichteten Oberfläche (1b), und mit auf der Oberfläche (1b) angeordneten, die Wärmeübertragungsfläche vergrößernden Rippen (2), die aus einem wellenförmigen Rippenband aus Aluminium gebildet werden, bei dem das Rippenband auf der beschichteten Oberfläche (1b) punktförmig durch Verschweißen oder Durchsetzfügen mit einer je nach Länge des Rohres (1) oder der Anzahl der Rippen (2) gerade ausreichenden Anzahl von Punkten am Rohr (19 fixiert wird, dass eine stabile Verbindung hergestellt wird, wobei eine flächenmäßige Verspannung der Rippen (2) mit dem Rohr (1) nicht vorgenommen wird,
dass Lot als Wärmeleitmaterial in den zwischen der Oberfläche des Rohres (1) und der Rippen (29 vorhandenen Zwischenräume zur Bildung von Wärmeübergangsbereichen (5) vorhanden ist,
und die Rippen-Rohr-Anordnung in einen Lötofen eingebracht und das Lot durch Erwärmung verflüssigt wird, und dass das Lot abschließend abgekühlt wird.

2. Verfahren nach Anspruch 1,
**dadurch gekennzeichnet,**
**dass** das Rippenband mit drei bis sieben Schweißpunkten an der beschichteten Oberfläche (1 b) des Rohres (1) punktförmig fixiert wird.

3. Verfahren nach Anspruch 1 oder 2,
**dadurch gekennzeichnet,**
**dass** als punktförmig dauerhaftes Fixieren Punktschweißen eingesetzt wird.

4. Verfahren nach Anspruch 1,
**dadurch gekennzeichnet,**
**dass** das Löten als Hartlöten durchgeführt wird.

5. Verfahren nach einem der Ansprüche 1 bis 4,
**dadurch gekennzeichnet,**
**dass** das Löten mit kurzen Einwirkzeiten erfolgt

6. Verfahren nach einem der Ansprüche 1 bis 5,
**dadurch gekennzeichnet,**
**dass** die Rippen (2) mit Lot (3) beschichtet und/oder plattiert sind.

7. Verfahren nach einem der Ansprüche 1 bis 5,
**dadurch gekennzeichnet,**
**dass** pulverförmiges Lot in die Zwischenräume eingebracht wird.

## Claims

1. A method for producing a heat exchanger with a metallic pipe (1), with an aluminium-coated surface (1b) and with ribs (2) which are arranged on the surface (1b), enlarge the heat-transfer surface and are formed from an undulating band of ribs made of aluminium, in which the band of ribs is fixed on the coated surface (1b) in a spot-like manner by welding or clinching to the pipe (19) with a number of points which is just sufficient according to the length of the pipe (1) or the number of ribs (2), that a stable connection is produced, with a clamping of the ribs (2) with the pipe (1) over the surface not being made, that solder is present as a heat conductive material in the cavities present between the surface of the pipe (1) and the rib (2) for forming heat transfer sections (5), and the rib-and-pipe arrangement is introduced into a soldering furnace and the solder is liquefied by heating and that the solder is cooled thereafter.

2. A method according to claim 1,
**characterized in that**
the band of ribs is fixed in a spot-like manner by means of three to seven spot welds to the coated surface (1 b) of the pipe (1).

3. A method according to claim 1 or 2,
**characterized in that**
spot-welding is used for spot-like permanent fixing.

4. A method according to claim 1,
**characterized in that**
soldering is carried out as brazing.

5. A method according to one of the claims 1 to 4,
**characterized in that**
soldering occurs with short times of exposure.

6. A method according to one of the claims 1 to 5,
**characterized in that**
the ribs (2) are coated and/or plated with solder (3).

7. A method according to one of the claims 1 to 5,
**characterized in that**
the powdery solder is introduced into the cavities.

## Revendications

1. Procédé de fabrication d'un échangeur de chaleur avec un tube métallique (1) ayant une surface revêtue d'aluminium (1 b), et avec des ailettes (2) disposées sur la surface (1 b) et augmentant la surface d'échange de chaleur, qui sont formées à partir d'une bande d'ailettes ondulée en aluminium, dans lequel la bande d'ailettes est fixée par points sur le tube (1) sur la surface revêtue (1 b) par soudage ou agrafage mécanique avec un nombre de points tout juste suffisant selon la longueur du tube (1) ou le nombre d'ailettes (2), de façon à obtenir un assemblage stable, sans qu'il y ait un serrage en surface des ailettes (2) avec le tube (1),
de la brasure servant de matériau conducteur thermique est présente dans les intervalles présents entre la surface du tube (1) et les ailettes (2) pour former des zones de transfert de chaleur (5),
et la disposition d'ailettes et de tube est introduite dans un four à braser et la brasure est liquéfiée par chauffage, puis la brasure est refroidie.

2. Procédé selon la revendication 1,
**caractérisé en ce**
**que** la bande d'ailettes est fixée par points avec un à sept points de soudure sur la surface revêtue (1b) du tube (1).

3. Procédé selon la revendication 1 ou 2,
**caractérisé en ce**
**que** la fixation permanente par points utilisée est un soudage par points.

4. Procédé selon la revendication 1,
**caractérisé en ce**
**que** le brasage réalisé est un brasage dur.

5. Procédé selon l'une des revendications 1 à 4,
**caractérisé en ce**
**que** le brasage est réalisé avec un temps d'action court.

6. Procédé selon l'une des revendications 1 à 5,
**caractérisé en ce**
**que** les ailettes (2) sont revêtues et/ou plaquées avec la brasure (3).

7. Procédé selon l'une des revendications 1 à 5,
**caractérisé en ce**
**que** de la brasure en poudre est introduite dans les intervalles.
